# EUROPÄISCHE PATENTSCHRIFT

(11) **EP 4 113 073 B1**
(45) Veröffentlichungstag und Bekanntmachung des Hinweises auf die Patenterteilung: **31.07.2024**
(21) Anmeldenummer: 21182828.0
(22) Anmeldetag: 30.06.2021
(51) Int. Cl.: G01G 15/00, G01G 17/00, G01G 21/22

(54) **VORRICHTUNG UND VERFAHREN ZUM WIEGEN VON GEFÜLLTEN KAPSELN**
DEVICE AND METHOD FOR WEIGHING FILLED CAPSULES
DISPOSITIF ET PROCÉDÉ DE PESAGE DE CAPSULES REMPLIES

(43) Veröffentlichungstag der Anmeldung: 04.01.2023
(73) Patentinhaber: Harro Höfliger Verpackungsmaschinen GmbH, 71573 Allmersbach im Tal (DE)
(72) Erfinder: Huhnen, Florian, 71573 Allmersbach im Tal (DE); Gall, Steffen, 71573 Allmersbach im Tal (DE); Cocks, Jonathan, 71573 Allmersbach im Tal (DE); Wurst, Reiner, 71573 Allmersbach im Tal (DE)
(74) Vertreter: Karzel, Philipp

(56) Entgegenhaltungen:
- US-B2- 10 935 415

## Beschreibung

Die Erfindung betrifft eine Vorrichtung zum Wiegen von Kapseln nach dem Oberbegriff des Anspruchs 1 sowie ein Verfahren zum Wiegen von Kapseln mittels einer solchen Vorrichtung.

Im pharmazeutischen Bereich und auch im Bereich von Nahrungsergänzungsmitteln werden zahlreiche Präparate in Kapseln abgefüllt, die zur oralen Einnahme vorgesehen sind. Bei verschiedenen Präparaten kommt es darauf an, dass diese als Einheitsdosis in der Kapsel mit einer fest definierten und exakt eingehaltenen Masse bereitgestellt werden. Geeignete Dosiervorrichtungen und -verfahren sollen sicherstellen, dass unter den Bedingungen der Großserienabfüllung sehr enge Massentoleranzen von beispielsweise ± 2 mg eingehalten werden.

Eine Vorrichtung und ein Verfahren zum Wiegen gefüllter Kapseln ist im Stand der Technik beispielsweise durch die Patentschrift US 10 935 415 B2 offenbart.

Solche Anforderungen an die Zielmasse gehen zunehmend auch mit dem Wunsch nach geeigneten Prüf- bzw. Verifikationsmaßnahmen einher. Zur Erfüllung solcher Forderungen sind insbesondere mehrspurig aufgebaute Kapselfüllmaschinen und mehrspurige Wiegesysteme im Einsatz. Die befüllten Kapseln werden entweder stichprobenartig auf die richtige Füllmenge kontrolliert oder aber, bei einer entsprechenden Anforderung, einer 100%ige In-Prozess-Kontrolle zugeführt. Dazu werden die Kapseln an eine mehrspurige Kapselwiegemaschine gefördert. Ist keine direkte Verbindung vorhanden, so kann die Kapselwiegemaschine auch von Hand beschickt werden. In der Kapselwiegemaschine werden die einzelnen Kapseln an eine Wiegeeinheit herangeführt. Beim Erreichen der Wiegeeinheit wird die Kapsel aus ihrer Bewegung mittels einer Stoppvorrichtung gestoppt und anschließend auf einer Wiegeaufnahme der Wiegeeinheit horizontal liegend abgelegt. Dort erfolgt dann eine prüfende Wägung der gefüllten Kapsel, bevor sie weitertransportiert und durch die nachfolgende Kapsel an der Wiegevorrichtung ersetzt wird.

Es hat sich gezeigt, dass die solchermaßen durchgeführte Wägung den limitierenden Faktor hinsichtlich Durchlaufgeschwindigkeit und Ausbringungsmenge darstellt. Für eine im Milligramm-Bereich exakt und wiederholbar durchzuführende Gewichtsmessung muss die jeweilige Kapsel absolut ruhig auf der Wiegeaufnahme aufliegen. Die mit hoher Geschwindigkeit herangeführte Kapsel muss also zunächst abgebremst, also gestoppt und dann sauber abgelegt werden, bevor die eigentliche Wägung durchgeführt werden kann. Für einen schnellen Weitertransport ist dann erneut eine hohe Beschleunigung erforderlich. Um trotzdem eine für die Messung ausreichend lange Ruhephase zu haben, darf die Taktzahl der Maschine insgesamt ein bestimmtes Maß nicht überschreiten. Eine Steigerung der Ausbringungsmenge kann unter diesen Bedingungen nur durch eine Erhöhung der Anzahl der Maschinenspuren erreicht werden, was den für die Wiegevorrichtung ohnehin schon hohen Investitionsaufwand weiter erhöht.

Der Erfindung liegt die Aufgabe zugrunde, eine gattungsgemäße Vorrichtung zum Wiegen von gefüllten Kapseln derart weiterzubilden, dass eine präzise Wägung auch bei verkürzten Taktzeiten möglich ist.

Diese Aufgabe wird durch eine Vorrichtung mit den Merkmalen des Anspruchs 1 gelöst.

Der Erfindung liegt des Weiteren die Aufgabe zugrunde, ein schnelleres Verfahren zum Wiegen von Kapseln anzugeben.

Diese Aufgabe wird durch ein Verfahren mit den Merkmalen des Anspruchs 11 gelöst.

Die Erfindung basiert zunächst auf der Kenntnis, dass Kapseln mit unterschiedlichem Füllgrad unterschiedlich empfindlich auf Verkürzungen der Wiegetaktzeiten reagieren. So wurde zunächst erkannt, dass vollgefüllte Kapseln in einer relativ kurzen Zeit exakt gewogen werden können, während teilgefüllte Kapseln hierfür einen im Vergleich längeren Zeitraum benötigen. Dies führte zu der weiteren erfindungsgemäßen Erkenntnis, dass die Füllung von teilgefüllten Kapseln auch dann noch ein dynamisches Verhalten zeigen, wenn der Vorgang des Abbremsens und Ablegen der Kapsel auf der Wiegeaufnahme an sich bereits abgeschlossen ist. Infolge der anfänglich wirkenden Verzögerung beim Stoppen sammelt sich die Füllung am in Bewegungsrichtung vorderen Ende der Kapsel. Nach der Ablage auf der Wiegeaufnahme rieselt die vorne in der Kapsel angesammelte pulver- oder granulatartige Füllung zumindest teilweise auf die in Gewichtskraftrichtung unten liegende Kapselwand zurück, wobei sich nach Art einer Schüttung eine Böschung mit einem bestimmten Böschungswinkel ausbildet. Dieser Vorgang des Zurückrieselns, gegebenenfalls in Verbindung mit einer Böschungsbildung nimmt eine bestimmte Zeit in Anspruch, während die Kapsel bereits auf der Wiegeaufnahme liegt. Solange die Füllung im Kapselinneren noch in Bewegung ist, werden die Messergebnisse einer Wägung verfälscht. Im Ergebnis kann eine schnelle und exakte Wägung der gesamten Kapsel erst dann vorgenommen werden, wenn erstens zusammen mit der Kapselhülle auch die Füllung zur Ruhe gekommen ist, und wenn zweitens für alle Kapseln vergleichbare Ruhelagen erzielt werden können.

Aufbauend hierauf sieht die Erfindung eine Vorrichtung vor, in der eine Stoppvorrichtung Teil der Wiegeaufnahme ist und dazu ausgelegt ist, die jeweils gestoppte Kapsel in einem Aufnahmeabschnitt der Wiegeaufnahme in Bewegungsrichtung formschlüssig zu halten. Dies ermöglicht den Aufnahmeabschnitt der Wiegeaufnahme bezüglich einer Horizontalrichtung derart geneigt auszubilden, dass ein bezogen auf die Bewegungsrichtung vorderes Ende des Aufnahmeabschnittes tiefer liegt als ein hinteres Ende des Aufnahmeabschnittes. Folglich liegt auch die Kapsel in einer entsprechend geneigten Lage. Während des Wiegens der Kapsel wird diese durch die Stoppvorrichtung formschlüssig gehalten. Diese Ausgestaltung der Stoppvorrichtung erlaubt besonders hohe Neigungswinkel zwischen Aufnahmeabschnitt und Horizontalrichtung, ohne dass die Kapsel von dem Aufnahmeabschnitt rutscht. Aufgrund der erfindungsgemäßen Neigung des Aufnahmeabschnittes der Wiegeaufnahme und der erfindungsgemäß geneigten Ablage der Kapsel hierauf, kann die Zeitspanne deutlich verringert werden, in welcher die Füllung nach dem Stoppen der Kapsel aus der vorderen Stopp-Position zurück rieselt oder fließt. Im Vergleich zum Stand der Technik können deutlich kürzere Wartezeiten eingehalten werden, bevor eine verlässliche Wägung vorgenommen werden kann.

Es ist vorteilhaft vorgesehen, dass der Aufnahmeabschnitt der Wiegeaufnahme eine Längsachse aufweist, wobei die Längsachse des Aufnahmeabschnittes bezüglich der Horizontalrichtung in einem Neigungswinkel geneigt ist. Bevorzugt liegt der Neigungswinkel in einem Bereich von 30° bis 90°, bevorzugt in einem Bereich von 45° bis 75° und insbesondere in einem Bereich von 50° bis 60°. Je höher der Neigungswinkel ist, desto schneller stellt sich eine Ruhephase des Füllgutes ein. Ist der Neigungswinkel zu hoch gewählt, kann die Kapsel aus der Wiegeaufnahme springen. Demnach ist ein geeigneter Neigungswinkel zu wählen, der eine sichere Endlage der Kapsel in der Wiegeaufnahme sowie eine schnelle Ruhephase der Füllung nach dem Stoppen der Kapsel ermöglicht.

Erfindungsgemäß ist der Aufnahmeabschnitt durch zwei Teilflächenabschnitte gebildet, wobei die Teilflächenabschnitte im Querschnitt des Aufnahmeabschnittes betrachtet einander zugewandt geneigt sind. Die Neigung der Teilflächenabschnitte zueinander ermöglicht eine automatische Zentrierung der Kapsel an dem Aufnahmeabschnitt, wodurch Kapseln verschiedener Größe positioniert werden können. Erfindungsgemäß schließen die beiden Teilflächenabschnitte einen Flächenwinkel ein, der in einem Bereich von 120° bis 60° liegt, insbesondere näherungsweise 90° beträgt.

Es ist vorzugsweise vorgesehen, dass die beiden Teilflächenabschnitte durch eine Öffnung voneinander getrennt sind. Die Öffnung ermöglicht dem Kapseltransporter durch die Wiegeaufnahme hindurchzufahren und dabei die Kapsel aus der Wiegeaufnahme aufzunehmen. Die Öffnung ist insbesondere als ein Schlitz ausgebildet. In einer alternativen Ausgestaltung kann es aber auch zweckmäßig sein, andere Konturen für die Öffnung vorzusehen. Die Öffnungskontur ist selbstverständlich an die des Kapseltransporters anzupassen.

Vorzugsweise ist der Zuführkanal als ein Fallschacht ausgebildet. Dies hat zur Folge, dass sich die Kapsel entlang des Zuführkanals mit hoher Geschwindigkeit in Richtung zur Wiegeaufnahme bewegt. Um die Kapsel dennoch an der Wiegeaufnahme halten zu können, ist die Stoppvorrichtung als Anschlag der Kapsel in Bewegungsrichtung ausgebildet. Es ist vorzugsweise vorgesehen, dass die Vorrichtung einen Kapseltransporter zum Aussortieren der Kapsel aufweist. Der Kapseltransporter kann insbesondere als drehbares Taschenrad ausgebildet sein. Dies ermöglicht einen konstruktiv einfachen Aufbau der erfindungsgemäßen Vorrichtung.

Ein Ausführungsbeispiel der Erfindung ist nachfolgend anhand der Zeichnung näher beschrieben. Es zeigen:
- Fig. 1: in einer schematischen Stirnansicht eine erfindungsgemäße Vorrichtung zum Wiegen von Kapseln beim Halten der Kapsel,
- Fig. 2: in einer ausschnittsweisen, schematischen Stirnansicht die Vorrichtung nach Fig. 1 mit an der Stoppvorrichtung gehaltener Kapsel,
- Fig. 3: in einer schematischen Schnittdarstellung entlang der in Fig. 2 dargestellten Schnittlinie in Richtung der Pfeile III die Wiegeaufnahme,
- Fig. 4: in einer schematischen Stirnansicht die Vorrichtung zum Wiegen von Kapseln nach Fig. 1 mit im Taschenrad aufgenommener Kapsel und
- Fig. 5: in einer schematischen Stirnansicht die Vorrichtung zum Wiegen von Kapseln nach Fig. 1 beim Aussortieren der Kapsel.

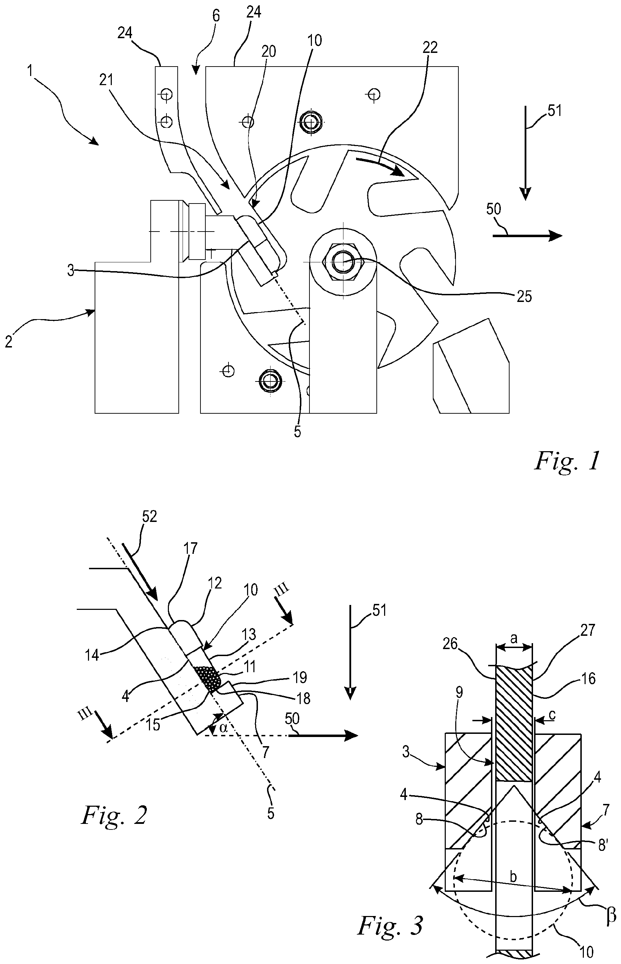

Die Fig. 1 zeigt eine Ausführung der erfindungsgemäßen Vorrichtung 1 zum Wiegen von Kapseln 10 mit einer Füllung 11. Die Vorrichtung 1 ist in gewöhnlicher, aufrecht stehender Betriebsposition relativ zu einer Horizontalrichtung 50 und einer orthogonal dazu liegenden Gewichtskraftrichtung 51 gezeigt. Die Gewichtskraftrichtung 51 entspricht der Richtung der Erdanziehungskraft beziehungsweise der Erdbeschleunigung.

Die zu wiegende Kapsel 10 ist hier beispielhaft als Steckkapsel mit einem Kapselunterteil 13 und einem aufgesteckten Kapseloberteil 12 gezeigt. Es können aber auch andere, beispielsweise vollständig geschlossene Kapselformen in Betracht kommen. Die Kapsel 10 enthält eine Füllung 11 mit graphisch angedeuteten Körnern (Fig. 2), demnach die Füllung ein Pulver, ein Granulat oder dergleichen ist. Im Rahmen der Erfindung können aber auch Flüssigkeiten als Füllung 11 vorgesehen sein. Jedenfalls geht es vorrangig um Füllungen 11, die fließende oder fließähnliche Eigenschaften haben. Außerdem wird in Fig. 2 noch deutlich, dass die Kapsel 10 nur teilgefüllt ist, demnach also die Füllung 11 den Innenraum der Kapsel 10 nicht vollständig ausfüllt. Mit dem erfindungsgemäßen Verfahren und der erfindungsgemäßen Vorrichtung können allerdings auch vollständig gefüllte Kapseln 10 gewogen werden.

Wie in Fig. 1 gezeigt, umfasst die Vorrichtung eine Wiegeeinheit 2 mit einer Wiegeaufnahme 3 für jeweils eine einzelne zu wiegende Kapsel 10. Ferner umfasst die Vorrichtung 1 einen Zuführkanal 6 zum Heranführen einzelner Kapseln 10 an die jeweilige Wiegeeinheit 2. Im Ausführungsbeispiel ist der Zuführkanal 6 als ein Fallschacht ausgebildet. Demnach weist der Zuführkanal 6 eine gegenüber der Horizontalrichtung 50 derartige Neigung auf, dass die Kapsel 10 durch den Zuführkanal 6 bis zur Wiegeeinheit 2 hindurchrutscht. Der Zuführkanal 6 erstreckt sich bis zur Wiegeeinheit 2, wodurch die die Kapsel 10 von dem Zuführkanal 6 unmittelbar auf die Wiegeeinheit 2 gleiten kann.

Wie in den Figuren 1 und 2 gezeigt, umfasst die Vorrichtung 1 eine Stoppvorrichtung 7 für die in Bewegungsrichtung 52 an die Wiegeeinheit 2 herangeführte Kapsel 10. Die Stoppvorrichtung 7 ist Teil der Wiegeaufnahme 3. Die Stoppvorrichtung 7 ist dazu ausgelegt, die gestoppte Kapsel 10 in einem Aufnahmeabschnitt 4 der Wiegeaufnahme 3 in Bewegungsrichtung 52 formschlüssig zu halten. Hierzu ist an der Stoppvorrichtung 7 ein Vorsprung gegenüber dem Aufnahmeabschnitt 4 der Wiegeaufnahme 3 ausgebildet. Die Kapsel 10 gleitet über den Zuführkanal 6 in Bewegungsrichtung 52 auf die Wiegeaufnahme 3 und kommt an ihrem in Bewegungsrichtung 52 vorderen Ende 18 am Vorsprung 19 zum Liegen. Demnach bildet der Vorsprung 19 der Stoppvorrichtung 7 einen Anschlag für die Kapsel 10 in Bewegungsrichtung 52. Ist die Kapsel 10 zum Liegen gekommen, kann deren Gewicht in der Wiegeaufnahme 3 gemessen werden. Der Vorsprung 19 der Stoppvorrichtung 7 verhindert zudem, dass die Kapsel 10 während des Wiegevorganges von der Wiegeaufnahme 3 abgleitet.

Das Stoppen der Kapsel 10 führt entgegen der Bewegungsrichtung 52 auch zu einem Bremsen der Füllung 11 innerhalb der Kapsel 10. Infolge der wirkenden Massenkräfte sammelt sich die Füllung 11 im Bereich des vorderen Endes 18 der Kapsel 10, während das hintere Ende 17 der Kapsel 10 frei ist. Bei in etwa horizontal positionierten Kapseln 10 konnte beobachtet werden, dass die Füllung 11 innerhalb der Kapsel 10 nach dem Stoppen aus dem Bereich des vorderen Endes 18 zumindest teilweise zurück auf den in Gewichtskraftrichtung 51 unteren Wandbereich der Kapsel 10 fließt bzw. rieselt. Die Bewegung der Füllung 11 innerhalb der Kapsel 10 führt zu Abweichungen der Wägung der Kapsel 10. Dies hat zur Folge, dass sich die Zeitspanne erhöht, bis sich die Kapsel 10 nach dem Stoppen in einer Ruhelage befindet und mit ausreichender Genauigkeit gewogen werden kann.

Wie in Fig. 2 gezeigt, ist der Aufnahmeabschnitt 4 der Bereich der Wiegeaufnahme 3, innerhalb dessen die Kapsel 10 abgelegt wird. Der Aufnahmeabschnitt 4 erstreckt sich dabei entlang seiner Längsachse 5. Als Referenz für die Orientierung des Aufnahmeabschnitts 4 und der Kapsel 10 sind die Horizontalrichtung 50 und die senkrecht dazu verlaufende Gewichtskraftrichtung 51 beim gewöhnlichen Betrieb eingezeichnet, auf die hier Bezug genommen wird. Aus dem anfänglich beschriebenen Stand der Technik ist bekannt, dass entsprechende Aufnahmeabschnitte im Wesentlichen horizontal, also parallel zur Horizontalrichtung 50 ausgerichtet. Dementsprechend liegt auch die Kapsel 10 mit ihrer Längsachse im Wesentlichen horizontal auf dem Aufnahmeabschnitt 4 auf. Gemäß Stand der Technik folgt aus der horizontalen Ausrichtung der Kapsel beim Stoppen, bei der Übergabe zur Wiegeeinheit und beim Aufliegen auf dem Aufnahmeabschnitt der Wiegeaufnahme eine ausgeprägte Umlagerung der Füllung innerhalb der Kapsel vom vorderen Ende zurück zur unteren Kapselwand. Infolge kann eine zuverlässige Wägung erst nach einer bestimmten Beruhigungsphase der Füllung vorgenommen werden.

Wie in den Figuren 1 und 2 gezeigt, ist der Aufnahmeabschnitt 4 der Wiegeaufnahme 3 derart ausgebildet, dass die gestoppte Kapsel 10 gegenüber der Horizontalrichtung 50 geneigt angeordnet ist. Die Längsachse 5 des Aufnahmeabschnittes 4 schließt mit der Horizontalrichtung 50 einen Neigungswinkel α ein. Wie in Fig. 2 gezeigt, liegt der Neigungswinkel α in einem Bereich von 30° bis 90°, bevorzugt in einem Bereich von 45° bis 75° und insbesondere in einem Bereich von 50° bis 60°. Dies hat zur Folge, dass ein in Bewegungsrichtung 52 der Kapsel 10 vorderes Ende 15 des Aufnahmeabschnittes 4 tiefer liegt als ein in Bewegungsrichtung 50 hinteres Ende 14 des Aufnahmeabschnittes 4. An dem vorderen Ende 15 des Aufnahmeabschnittes 4 ist der Vorsprung 19 der Stoppvorrichtung 7 ausgebildet. Wie in Fig. 2 gezeigt, liegt die Kapsel 10 mit ihrem vorderen Ende 18 auf dem vorderen Ende 15 des Aufnahmeabschnitts 4 und kontaktiert zudem die Stoppvorrichtung 7. Ferner liegt die Kapsel mit ihrem hinteren Ende 17 auf dem hinteren Ende 14 des Aufnahmeabschnittes 4. Je größer der Neigungswinkel α zwischen der Längsachse 5 und der Horizontalrichtung 50 ist, desto geringer ist die Umlagerung der Füllung 11 der Kapsel 10, nachdem die Kapsel 10 gestoppt wurde. Demnach reduziert sich auch die Dauer der Beruhigungsphase der Füllung 11. Aus diesem Grund ist der Neigungswinkel α erfindungsgemäß möglichst hoch gewählt. Dies hat zur Folge, dass die Kapsel 10 an dem Aufnahmeabschnitt 4 der Wiegeaufnahme 3 während der Wägung mittels der Stoppvorrichtung 7 gehalten werden muss. Der Reibkraftschluss zwischen der Kapsel 10 und dem Aufnahmeabschnitt 4 der Wiegeaufnahme 3 ist bei einem derartigen Neigungswinkel α zu gering, um die Kapsel 10 ohne die Stoppvorrichtung 7 halten zu können. Die Kapsel 10 würde ohne Stoppvorrichtung 7 in Bewegungsrichtung 52 von dem Aufnahmeabschnitt 4 abgleiten. Die Stoppvorrichtung 7 ist unmittelbar an der Wiegeeinheit 2 vorgesehen. Der Stoppvorrichtung 7 werden somit zwei Aufgaben zu teil, nämlich zum einen die Kapsel 10 zu stoppen, wenn diese aus dem Zuführkanal 6 auf die Wiegeaufnahme 3 rutscht, und zum anderen die Kapsel in gestoppter Stellung auf dem Aufnahmeabschnitt 4 der Wiegeaufnahme 3während der Wägung zu halten. Die Wiegeaufnahme 3 und die Stoppvorrichtung 7 sind fest miteinander verbunden. In der bevorzugten Ausführung ist die Wiegeeinheit 2 mit der Stoppvorrichtung 7 einteilig ausgebildet.

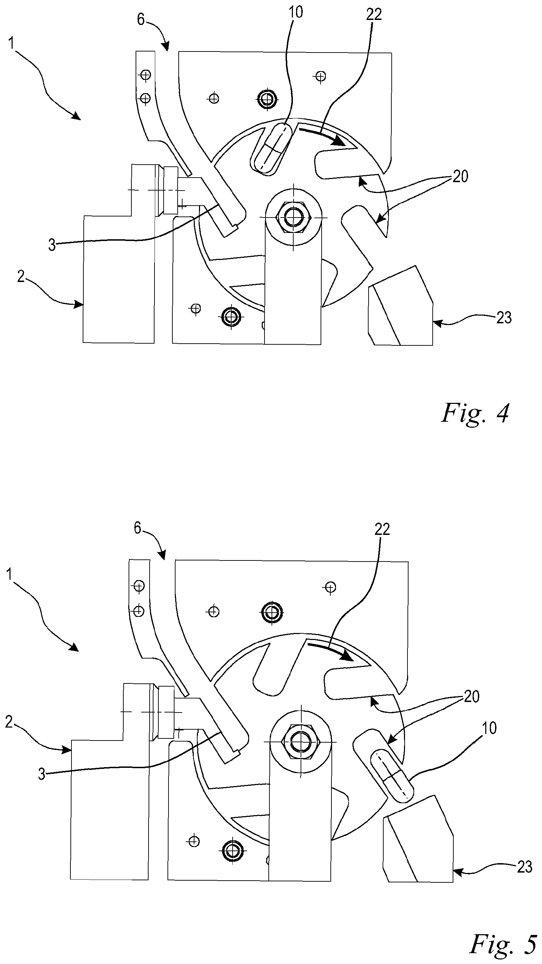

Wie in Fig. 1 gezeigt, umfasst die Vorrichtung 1 einen Kapseltransporter 16. Der Kapseltransporter 16 nimmt die Kapsel 10 nach der Wägung auf und sortiert diese aus. Im bevorzugten Ausführungsbeispiel ist der Kapseltransporter 16 als drehbares Taschenrad ausgebildet. Der Kapseltransporter 16 weist mindestens eine Aufnahmetasche 20 auf. Im bevorzugten Ausführungsbeispiel sind an dem Kapseltransporter 16 mehrere, insbesondere fünf Aufnahmetaschen 20 vorgesehen. Beim Zuführen der Kapsel 10 befindet sich der Kapseltransporter in einer Offenstellung 21, in der die Aufnahmetasche 20 fluchtend zum Zuführkanal 6 ausgerichtet ist. Demnach kann die Kapsel 10 in die Wiegeaufnahme 3 gleiten. Die bezüglich der Gewichtskraftrichtung obere Innenseite einer zum Zuführkanal 6 fluchtende Aufnahmetasche 20 bildet einen oberen Bewegungsanschlag für die Kapsel 10, so dass diese in ihrer Längsrichtung parallel zur Bewegungsrichtung 50 auf dem Aufnahmeabschnitt 4 zum Liegen kommt. Nach der Wägung dreht sich der Kapseltransporter in Drehrichtung 22 weiter. Dabei wird die Kapsel 10 von der Wiegeaufnahme 3 entnommen und in der Aufnahmetasche 20 des Kapseltransporters 16 weitergeführt (Fig. 4). Ferner umfasst die Vorrichtung 1 einen Aussortierschacht 23, der derart an dem Kapseltransporter 16 angeordnet ist, dass die Kapsel 10 bei entsprechender Drehung des Kapseltransporters 16 aus der Aufnahmetasche 20 in den Aussortierschacht 23 fällt (Fig. 5).

Fig. 3 zeigt eine schematische Schnittdarstellung der Wiegeaufnahme 3. Die Kapsel 10 ist schematisch als eine gestrichelte Kreislinie dargestellt. Wie in Fig. 3 gezeigt, unterteilt sich der Aufnahmeabschnitt 4 in zwei einzelne Teilflächenabschnitte 8, 8'. Die Kapsel 10 liegt an den beiden Teilflächenabschnitten 8, 8' an. Die beiden Teilflächenabschnitte 8, 8' sind im Querschnitt des Aufnahmeabschnittes 4 betrachtet einander zugewandt geneigt. Die Teilflächenabschnitte 8, 8' verlaufen parallel zur Längsachse 5 des Aufnahmeabschnittes 4. Die beiden Teilflächenabschnitte 8, 8' schließen einen Flächenwinkel β ein, wobei der Flächenwinkel β kleiner 180° ist. In bevorzugter Ausführung liegt der Flächenwinkel β in einem Bereich von 60° bis 120° und beträgt im gezeigten bevorzugten Ausführungsbeispiel zumindest näherungsweise 80°. Hierdurch wird die Kapsel 10 automatisch zentriert zwischen den Teilflächenabschnitten 8, 8' gehalten. Durch diese Ausgestaltung des Aufnahmeabschnittes 4 können auch Kapseln 10 verschiedener Größe gehalten werden. Ferner ist an der Wiegeaufnahme 3 eine Öffnung 9 vorgesehen. Die Öffnung 9 ist derart ausgebildet, dass der Kapseltransporter 16 durch die Öffnung 9 fahren und dabei die Kapsel 10 aufnehmen kann. Die Kapsel 10 wird von der Wiegeaufnahme 3 angehoben. Wie in Fig. 3 gezeigt, ist die Öffnung 9 zwischen den beiden Teilflächenabschnitten 8, 8' ausgebildet. Im bevorzugten Ausführungsbeispiel ist die Öffnung 9 als Schlitz ausgebildet. Die Öffnung 9 kann auch eine andere Kontur aufweisen, die es dem Kapseltransporter 16 ermöglicht, die Kapsel 10 aus der Wiegeaufnahme 3 zu entnehmen.

Derartige Wiegeeinheiten 2 sind äußerst sensitive Messsysteme, die bereits bei geringer Krafteinwirkung reagieren. So können die Messergebnisse beim Wiegen einer Kapsel 10 bereits durch ungewünschte Luftströmungen, die auf die Wiegeaufnahme 3 oder auf die Kapsel 10 wirken, verfälscht werden. Daher sieht das in Fig. 1 gezeigte Ausführungsbeispiel mehrere Maßnahmen zur Reduzierung von Luftströmungen an der Wiegeeinheit 2 vor. Wie in Fig. 1 gezeigt, umfasst die Vorrichtung 1 ein Gehäuse 24, wobei das Gehäuse 24 die Wiegeaufnahme 3 umgibt. Der Zuführkanal 6 ist im Gehäuse 24 ausgebildet. Das Gehäuse 24 umgibt die Wiegeaufnahme 3 derart, dass Luftströmungen von außerhalb des Gehäuses 24 lediglich über den Zuführkanal 6 an die Wiegeaufnahme 3 gelangen können. Dadurch sind die auf die Wiegeaufnahme 3 wirkenden Luftströmungen reduziert.

Um auch die vom Kapseltransporter 16 ausgehenden Luftströmungen zu reduzieren, weißt dieser eine äußerst schmale Bauweise auf. Der Kapseltransporter 16 ist um seine Drehachse 25 drehend, vorzugsweise am Gehäuse 24, gelagert. Wie in Fig. 3 gezeigt, ist der Kapseltransporter 16 zumindest teilweise in der Öffnung 9 der Wiegeaufnahme 3 angeordnet. Der Kapseltransporter 16 weist eine in Richtung seiner Drehachse 25 gemessene Breite a auf, die sich von seiner ersten Stirnseite 26 bis zu seiner zweiten Stirnseite 27 erstreckt. Die Breite a des Kapseltransporters 16 ist vorzugsweise geringer als ein Durchmesser der Kapsel 10. Ferner beträgt die Breite a des Kapseltransporters 16 höchstens 75%, vorzugsweise 50% des Durchmessers d der Kapsel 10. Ferner weist die Öffnung 9 der Wiegeaufnahme 3 eine ebenfalls in Richtung der Drehachse 25 des Kapseltransporters 16 gemessene Breite c auf. Die Breite c der Öffnung 9 ist größer als die Breite a des Kapseltransporters 16. Diese schmale Ausbildung des Kapseltransporters 16 führt dazu, dass die vom Kapseltransporter 16 bewegten Luftmassen gering sind, wodurch der Einfluss auf die Wiegeaufnahme 3 ebenfalls gering ist. Ferner ist der Kapseltransporter 16 an seinen Stirnseiten 26, 27 von dem Gehäuse 24 derart umgeben, dass die Kapsel 10 gehalten in den Aufnahmetaschen 20 am Gehäuse 24 geführt ist. Dadurch können die Kapseln 10 nicht aus den Aufnahmetaschen 20 des Kapseltransporters 16 fallen. Wie bereits oben ausgeführt, ist der Aufnahmeabschnitt 4 in die zwei einzelnen Teilflächenabschnitte 8, 8' unterteilt. Neben dem Vorteil, Kapseln 10 besser aufnehmen zu können, besteht eine weitere Funktion der Zweiteilung auch darin, dass sich die potentielle Anströmfläche für Luftströmungen an der Wiegeaufnahme 3 reduzieren. Somit kann eine Vielzahl an potentiellen Messstörungen an der Wiegeeinheit vermieden werden.

Die Erfindung ist hier beispielhaft im einspurigen Betrieb mit nur einem Zuführkanal 6 und nur einer Wiegeeinheit 2 dargestellt. Im praktischen Betrieb können aber ohne Weiteres mehrspurige, parallel laufende Ausführungen zweckmäßig sein, bei denen eine entsprechende Anzahl von Zuführkanälen 6 und Wiegeeinheiten 2 für die gleichzeitige und parallel Prüfung von mehreren Kapseln 10 nebeneinander angeordnet sind.

## Patentansprüche

1. Vorrichtung zum Wiegen von Kapseln mit einer Füllung,
wobei die Vorrichtung (1) eine Wiegeeinheit (2) mit einer Wiegeaufnahme (3) für die Kapsel (10), einen Zuführkanal (6) zum Heranführen einzelner Kapseln (10) an die Wiegeeinheit (2) in einer Bewegungsrichtung (52) sowie eine Stoppvorrichtung (7) für die in Bewegungsrichtung (52) herangeführte Kapsel (10) aufweist,
**wobei** die Stoppvorrichtung (7) Teil der Wiegeaufnahme (3) ist und dazu ausgelegt ist, die jeweils gestoppte Kapsel (10) in einem Aufnahmeabschnitt (4) der Wiegeaufnahme (3) in Bewegungsrichtung (52) formschlüssig zu halten, und wobei der Aufnahmeabschnitt (4) der Wiegeaufnahme (3) bezüglich einer Horizontalrichtung (50) derart geneigt ist, dass ein bezogen auf die Bewegungsrichtung (52) vorderes Ende (15) des Aufnahmeabschnittes (4) tiefer liegt als ein hinteres Ende (14) des Aufnahmeabschnittes (4),
wobei der Aufnahmeabschnitt (4) durch zwei Teilflächenabschnitte (8, 8') gebildet ist, wobei die Teilflächenabschnitte (8, 8') im Querschnitt des Aufnahmeabschnittes (4) betrachtet einander zugewandt geneigt sind, **dadurch gekennzeichnet, dass** die beiden Teilflächenabschnitte (8, 8') einen Flächenwinkel (β) einschließen, der in einem Bereich von 120° bis 60° liegt.

2. Vorrichtung nach Anspruch 1,
**dadurch gekennzeichnet, dass** der Aufnahmeabschnitt (4) der Wiegeaufnahme (3) eine Längsachse (5) aufweist, wobei die Längsachse (5) des Aufnahmeabschnittes (4) bezüglich der Horizontalrichtung (50) in einem Neigungswinkel (α) geneigt ist, wobei der Neigungswinkel (α) in einem Bereich von 30° bis 90°, bevorzugt in einem Bereich von 45° bis 75° und insbesondere in einem Bereich von 50° bis 60° liegt.

3. Vorrichtung nach Anspruch 1 oder 2,
**dadurch gekennzeichnet, dass** die beiden Teilflächenabschnitte (8, 8') durch eine Öffnung (9) voneinander getrennt sind.

4. Vorrichtung nach Anspruch 3,
**dadurch gekennzeichnet, dass** die Öffnung (9) als ein Schlitz ausgebildet ist.

5. Vorrichtung nach einem der Ansprüche 1 bis 4,
**dadurch gekennzeichnet, dass** der Zuführkanal (6) als ein Fallschacht ausgebildet ist.

6. Vorrichtung nach einem der Ansprüche 1 bis 5,
**dadurch gekennzeichnet, dass** die Stoppvorrichtung (7) als Anschlag für die Kapsel (10) in Bewegungsrichtung (52) ausgebildet ist.

7. Vorrichtung nach einem der Ansprüche 1 bis 6,
**dadurch gekennzeichnet, dass** die Vorrichtung (1) einen Kapseltransporter (16) zum Aussortieren der Kapsel (10) aufweist.

8. Vorrichtung nach Anspruch 7,
**dadurch gekennzeichnet, dass** der Kapseltransporter (16) als drehbares Taschenrad ausgebildet ist.

9. Verfahren zum Wiegen von Kapseln mit einer Füllung mittels einer Vorrichtung (1) nach einem der Ansprüche 1 bis 8,
umfassend folgende Schritte:
- Eine zumindest teilweise mit der Füllung (11) gefüllte Kapsel (10) wird mittels eines Zuführkanals (6) in einer Bewegungsrichtung (52) an die Wiegeeinheit (2) herangeführt;
- Beim Erreichen der Wiegeeinheit (2) wird die Kapsel (10) aus ihrer Bewegung in der Bewegungsrichtung (52) mittels einer Stoppvorrichtung (7) gestoppt;
- Die gestoppte Kapsel (10) wird in einem Aufnahmeabschnitt (4) der Wiegeaufnahme (3) durch die Stoppvorrichtung (7) in Bewegungsrichtung (52) formschlüssig derart geneigt gehalten, dass ein bezogen auf die Bewegungsrichtung (52) vorderes Ende der Kapsel (18) tiefer liegt als ein hinteres Ende der Kapsel (17);
- die geneigt gehaltene Kapsel (10) wird gewogen.

## Claims

1. Device for weighing capsules with a filling, wherein the device (1) has a weighing unit (2) having a weighing receptacle (3) for the capsule (10), a supply duct (6) for feeding individual capsules (10) to the weighing unit (2) in a direction of movement (52), and a stopping device (7) for the capsule (10) fed in the direction of movement (52),
**wherein** the stopping device (7) is part of the weighing receptacle (3) and is conceived to hold the respectively stopped capsule (10) in a receptacle portion (4) of the weighing receptacle (3) in a form-fitting manner in the direction of movement (52); and
wherein the receptacle portion (4) of the weighing receptacle (3) is inclined in relation to a horizontal direction (50) in such a manner that a front end (15) of the receptacle portion (4) in terms of the direction of movement (52) lies lower than a rear end (14) of the receptacle portion (4); wherein the receptacle portion (4) is formed by two partial area portions (8, 8');
wherein the partial area portions (8, 8') are inclined towards one another when viewed in the cross section of the receptacle portion (4), **characterized in that** the two partial area portions (8, 8') enclose a dihedral angle (β) which is in a range from 120° to 60°.

2. Device according to Claim 1,
**characterized in that** the receptacle portion (4) of the weighing receptacle (3) has a longitudinal axis (5), wherein the longitudinal axis (5) of the receptacle portion (4) in terms of the horizontal direction (50) is inclined at an inclination angle (α), wherein the inclination angle (α) is in a range from 30° to 90°, preferably in a range from 45° to 75°, and in particular in a range from 50° to 60°.

3. Device according to Claim 1 or 2,
**characterized in that** the two partial area portions (8, 8') are mutually separated by an opening (9).

4. Device according to Claim 3,
**characterized in that** the opening (9) is designed as a slot.

5. Device according to one of Claims 1 to 4,
**characterized in that** the supply duct (6) is designed as a gravity chute.

6. Device according to one of Claims 1 to 5,
**characterized in that** the stopping device (7) is designed as a detent for the capsule (10) in the direction of movement (52).

7. Device according to one of Claims 1 to 6,
**characterized in that** the device (1) has a capsule conveyor (16) for sorting the capsules (10).

8. Device according to Claim 7,
**characterized in that** the capsule conveyor (16) is designed as rotatable pocket wheel.

9. Method for weighing capsules with a filling by means of a device (1) according to one of Claims 1 to 8, comprising the following steps:
- a capsule (10) which is at least partially filled with the filling (11) is offered up to the weighing unit (2) in a direction of movement (52) by means of a supply duct (6);
- when reaching the weighing unit (2), the capsule (10) is stopped in its movement in the direction of movement (52) by means of a stopping device (7);
- the stopped capsule (10) is held in a receptacle portion (4) of the weighing receptacle (3) in a form-fitting manner in the direction of movement (52) by the stopping device (7) so as to be inclined in such a manner that a front end of the capsule (18) in terms of the direction of movement (52) lies lower than a rear end of the capsule (17); and
- the capsule (10), held so as to be inclined, is weighed.

## Revendications

1. Dispositif pour peser des capsules remplies,
le dispositif (1) présentant une unité de pesage (2) avec un logement de pesage (3) pour la capsule (10), un canal d'alimentation (6) pour amener des capsules individuelles (10) à l'unité de pesage (2) dans une direction de déplacement (52) ainsi qu'un dispositif d'arrêt (7) pour la capsule (10) amenée dans la direction de déplacement (52),
le dispositif d'arrêt (7) faisant partie du logement de pesée (3) et étant conçu pour maintenir chaque capsule (10) arrêtée, par complémentarité de forme, dans une partie de réception (4) du logement de pesée (3) dans la direction de déplacement (52), et la partie de réception (4) du logement de pesée (3) étant inclinée par rapport à une direction horizontale (50) de telle sorte qu'une extrémité avant (15) de la partie de réception (4) se trouve plus bas qu'une extrémité arrière (14) de la partie de réception (4) par rapport à la direction de déplacement (52),
la partie de réception (4) étant formée par deux parties de surface partielle (8, 8'), les parties de surface partielle (8, 8') étant, lorsqu'elles sont vues en coupe transversale de la partie de réception (4), inclinées l'une vers l'autre, **caractérisé en ce que** les deux parties de surface partielle (8, 8') forment un angle de surface (β) qui se situe dans une gamme allant de 120° à 60°.

2. Dispositif selon la revendication 1,
**caractérisé en ce que** la partie de réception (4) du réceptacle de pesée (3) présente un axe longitudinal (5), l'axe longitudinal (5) de la partie de réception (4) étant, par rapport à la direction horizontale (50), incliné d'un angle d'inclinaison (α), l'angle d'inclinaison (α) étant compris dans une gamme allant de 30° à 90°, de préférence dans une gamme allant de 45° à 75° et en particulier dans une gamme allant de 50° à 60°.

3. Dispositif selon la revendication 1 ou la revendication 2,
**caractérisé en ce que** les deux parties de surface partielle (8, 8') sont séparées l'une de l'autre par une ouverture (9).

4. Dispositif selon la revendication 3,
**caractérisé en ce que** l'ouverture (9) est réalisée sous la forme d'une fente.

5. Dispositif selon l'une des revendications 1 à 4,
**caractérisé en ce que** le canal d'alimentation (6) est réalisé sous la forme d'une goulotte.

6. Dispositif selon l'une des revendications 1 à 5,
**caractérisé en ce que** le dispositif d'arrêt (7) est conçu sous la forme d'une butée pour la capsule (10) dans la direction de déplacement (52).

7. Dispositif selon l'une des revendications 1 à 6,
**caractérisé en ce que** le dispositif (1) comporte un transporteur de capsules (16) pour trier les capsules (10).

8. Dispositif selon la revendication 7,
**caractérisé en ce que** le transporteur de capsules (16) est conçu sous la forme d'une roue à poches rotative.

9. Procédé de pesée de capsules remplies au moyen d'un dispositif (1) selon l'une des revendications 1 à 8,
comprenant les étapes suivantes :
- une capsule (10) remplie au moins partiellement du produit de remplissage (11) est amenée jusqu'à l'unité de pesée (2) au moyen d'un canal d'alimentation (6) dans une direction de déplacement (52) ;
- la capsule (10), lorsqu'elle atteint l'unité de pesage (2), est stoppée de son mouvement dans la direction de déplacement (52) au moyen d'un dispositif d'arrêt (7),
- la capsule (10) arrêtée est maintenue inclinée dans une partie de réception (4) du logement de pesée (3) par le dispositif d'arrêt (7), par complémentarité de formes dans la direction de déplacement (52), de telle sorte qu'une extrémité avant de la capsule (18) par rapport à la direction de déplacement (52) se trouve plus bas qu'une extrémité arrière de la capsule (17) ;
- la capsule (10) maintenue inclinée est pesée.
